# EUROPÄISCHE PATENTANMELDUNG

(11) **EP 4 001 721 A1**
(43) Veröffentlichungstag der Anmeldung: **25.05.2022**
(21) Anmeldenummer: 20209101.3
(22) Anmeldetag: 20.11.2020
(51) Int. Cl.: F16K 41/02, F16K 41/10

(54) **VENTIL**

(71) Anmelder: Gysi Management AG, 5022 Rombach (CH)
(72) Erfinder: Gysi, Franz, 5022 Rombach (CH)
(74) Vertreter: Herrmann, Johanna

(57) **Zusammenfassung**

Ein Ventil (1) enthält ein Ventilgehäuse (10), wobei das Ventilgehäuse (10) einen Einlassstutzen (11), einen Auslassstutzen (12) sowie einen Anschlussstutzen (13) für eine Betätigungsvorrichtung (6) enthält. Eine Fluideintrittsöffnung (15) ist im Einlassstutzen (11) angeordnet, eine Fluidaustrittsöffnung (16) ist im Auslassstutzen (12) angeordnet. Im Inneren des Ventilgehäuses (10) erstreckt sich ein Fluidkanal (14) von der Fluideintrittsöffnung (15) zur Fluidaustrittsöffnung (16), wobei im Fluidkanal (14) ein Ventilsitz (17) angeordnet ist, sodass der Fluidkanal (14) mittels eines durch den Anschlussstutzen (13) geführten Schliesselements (5) verschliessbar ist, wenn das Schliesselement (5) auf dem Ventilsitz (17) aufliegt. Der Ventilsitz (17) enthält ein erstes und zweites Fluiddichtungselement (4,8). Die Betätigungsvorrichtung (6) enthält ein erstes und ein zweites Umgebungsdichtungselement (9, 66). Das erste Umgebungsdichtungselement (9) erstreckt sich vom Schliesselement (5) zum Anschlussstutzen (13), um einen Kontakt der Betätigungsvorrichtung (6) mit dem im Betriebszustand durch den Fluidkanal (14) strömenden Fluid zu verhindern.

## Beschreibung

Die vorliegende Erfindung betrifft ein Ventil zur Förderung von Flüssigkeiten oder Gasen, insbesondere zur Verwendung in Armaturen. Dem Fachmann sind insbesondere Stopfbüchsenventile, Kolbenschieberventile, Faltenbalgventile, Membranventile oder Koaxialventile bekannt. Zur Förderung von Dämpfen, Kondensaten, Wärmeträgerölen oder Heissweisser werden hauptsächlich Stopfbüchsenventile, Kolbenschieberventile, Faltenbalgventile eingesetzt. Der Einsatz von Stopfbüchsenventilen erfolgt vor allem im Hochdruckbereich im ASME Normenbereich. Im EN Normenbereich werden in einem Nenndruckbereich bis PN 40 hauptsächlich Faltenbalgventile und Kolbenschieberventile eingesetzt, wobei in den letzten 30 Jahren vermehrt Faltenbalgventile Verwendung finden, weil die Dichtheit des Faltenbalgventils nach aussen durch die doppelte Abdichtung durch den Faltenbalg gegenüber dem Kolbenschieberventil verbessert ist. Das Kolbenschieberventil weist hingegen eine verbesserte Dichtheit im Durchgangskanal auf, wobei dieser Vorteil weniger stark ins Gewicht fällt, da auch die Dichtheit der Faltenbalgventile im Durchgang zwischenzeitlich deutliche Verbesserungen erfahren hat.

Ein Kolbenschieberventil ist robust gegen Dampfschläge. Zudem ist ein Kolbenschieberventil einfach zu warten, da die Verschleissteile, insbesondere die Kolbenringe, auch in eingebautem Zustand ausgetauscht werden können. Ein Kolbenschieberventil kann als Regelventil eingesetzt werden, da es für den Einsatz in einem Regelkreis geeignet ist. Zudem weist das Kolbenschieberventil gegenüber einem Faltenbalgventil verbesserte Kv-Werte auf.

Allerdings weist ein Kolbenschieberventil in der Regel einen langen Hub auf, zudem treten bei der Betätigung hohe Drehmomente auf, was zur Folge hat, dass das Kolbenschieberventil schwergängig ist. Im Bereich DN 15 bis DN 50 kann zudem die Dichtheit nach aussen im Vergleich um Faltenbalgventil schlechter sein, da durch den Faltenbalg eine doppelte Abdichtung möglich ist. Zudem ist das Kolbenschieberventil teuer sowohl in der Herstellung bedingt durch den Materialaufwand für den Kolben als auch in der Automatisierung.

Demgegenüber zeichnet sich das Faltenbalgventil durch eine leichtgängige Bedienung sowie durch geringere Automatisierungskosten aus. Allerdings kann der Faltenbalg auch eine Schwachstelle darstellen, da dessen metallische Abdichtung schneller beeinträchtigt werden kann, beispielsweise kann der Ventilsitz durch Partikel beschädigt werden oder der Faltenbalg bei Dampfschlägen brechen. Die Wartung bzw. Revision eines metallisch dichtenden Faltenbalgventils kann sich durch das Einschleifen des Ventilsitzes aufwändiger gestalten.

### Stand der Technik

Ein Kolbenschieberventil, welches als Regelventil eingesetzt wird, ist beispielsweise in der DE19723993 C1 gezeigt. Der Problematik von Leckagen zwischen dem Ventilsitz und dem Gehäuse bei geschlossenem Ventil wird mittels eines kombinierten Dichtungselements abgeholfen, welches als Ringscheibe aus einem wenig elastischen Material ausgebildet ist, welches im Bereich des inneren Randes ein elastisches Element enthält, welches am Ventilsitz abgestützt ist.

### Aufgabe der Erfindung

Aufgabe der Erfindung ist es, ein Ventil bereitzustellen, welches eine verbesserte Dichtheit im Durchgang und gegen einen Austritt von Fluid in die Umgebung aufweist.

### Beschreibung der Erfindung

Die Lösung der Aufgabe der Erfindung erfolgt durch ein Ventil gemäss Anspruch 1. Vorteilhafte Ausführungsbeispiele des Ventils sind Gegenstand der Ansprüche 2 bis 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Ventil. Die Beschreibung eines bestimmten Ventils ist nur als beispielhaft anzusehen. In der Beschreibung und den Ansprüchen werden die Begriffe "enthalten", "umfassen", "aufweisen" als "enthalten, aber nicht beschränkt auf" interpretiert.

Unter einem Fluid wird in der Folge ein beliebiges fliessfähiges Medium verstanden. Insbesondere kann ein Fluid ein kompressibles Medium umfassen, beispielsweise ein Gas. Insbesondere kann ein Fluid ein inkompressibles Medium umfassen, beispielsweise eine Flüssigkeit oder einen Slurry.

Die Aufgabe der Erfindung wird durch ein Ventil gelöst, welches ein Ventilgehäuse enthält, wobei das Ventilgehäuse einen Einlassstutzen, einen Auslassstutzen und einen Anschlussstutzen enthält. Eine Fluideintrittsöffnung ist im Einlassstutzen angeordnet, eine Fluidaustrittsöffnung ist im Auslassstutzen angeordnet. Im Inneren des Ventilgehäuses erstreckt sich ein Fluidkanal von der Fluideintrittsöffnung zur Fluidaustrittsöffnung, welcher im Betriebszustand von einem Fluid durchströmbar ist. Im Fluidkanal ist ein Ventilsitz angeordnet, sodass der Fluidkanal mittels eines Schliesselements verschliessbar ist, wenn das Schliesselement auf dem Ventilsitz aufliegt. Das Schliesselement ist mit einer Betätigungsvorrichtung koppelbar, wobei mittels der Betätigungsvorrichtung die Position des Schliesselements relativ zum Ventilsitz veränderbar ist, sodass der Fluidkanal geöffnet ist, wenn das Schliesselement nicht auf dem Ventilsitz aufliegt. Zwischen dem Ventilsitz und dem Schliesselement sind ein erstes Fluiddichtungselement und ein zweites Fluiddichtungselement angeordnet, um den Fluidkanal zu verschliessen. Die Betätigungsvorrichtung ist mittels eines ersten und zweiten Umgebungsdichtungselements gegen Leckage des Fluids aus dem Ventilgehäuse abdichtbar, wobei sich das erste Umgebungsdichtungselement vom Schliesselement zum Anschlussstutzen erstreckt, um einen Kontakt der Betätigungsvorrichtung mit dem im Betriebszustand durch den Fluidkanal strömenden Fluid zu verhindern und mittels eines zweiten Umgebungsdichtungselements der Austritt des Fluids aus dem Ventilgehäuse verhinderbar ist.

Gemäss eines Ausführungsbeispiels ist die Länge ersten Umgebungsdichtungselements in Abhängigkeit von der Position des Schliesselements veränderbar. Insbesondere kann das erste Umgebungsdichtungselement eine Buchse enthalten. Die Buchse kann ein Anpassungselement und eine Krempe umfassen.

Gemäss eines Ausführungsbeispiels ist die Krempe fluiddicht mit dem Anschlussstutzen verbindbar und das Anpassungselement fluiddicht mit dem Schliesselement verbindbar. Mittels des Anpassungselements ist die Länge des zweiten Dichtungselements in Abhängigkeit von der Position des Schliesselements anpassbar. Das Anpassungselement kann beispielsweise als Faltenbalg oder als elastischer Schlauch ausgebildet sein.

Gemäss eines Ausführungsbeispiels ist das Schliesselement mit der Betätigungsvorrichtung derart verbunden, dass eine Drehbewegung der Betätigungsvorrichtung relativ zum Schliesselement ermöglicht ist. Insbesondere enthält das Schliesselement eine axiale Bohrung, in welcher ein Endbereich der Betätigungsvorrichtung aufgenommen ist.

Gemäss eines Ausführungsbeispiels liegt das Schliesselement auf dem ersten und dem zweiten Fluiddichtungselement auf, wenn der Fluidkanal geschlossen ist. Gemäss eines Ausführungsbeispiels umfasst das Schliesselement ein Kolbenelement, welches auf dem ersten und dem zweiten Fluiddichtungselement aufliegt, wenn der Fluidkanal geschlossen ist.

Gemäss eines Ausführungsbeispiels umfasst die Betätigungsvorrichtung ein Stangenelement, wobei das Stangenelement einen ersten Abschnitt und einen zweiten Abschnitt aufweist. Der erste Abschnitt des Stangenelements ist mit einer Antriebseinheit verbindbar, der zweite Abschnitt des Stangenelements ist mit dem Schliesselement verbindbar.

Insbesondere kann der Anschlussstutzen eine Aufnahmeöffnung enthalten, wobei der zweite Abschnitt des Stangenelements sich von der Aufnahmeöffnung des Anschlussstutzens zum Schliesselement erstreckt, sodass der zweite Abschnitt innerhalb des zweiten Dichtungselements angeordnet ist. Das zweite Dichtungselement umgibt somit den zweiten Abschnitt des Stangenelements.

Gemäss eines Ausführungsbeispiels ist erste Abschnitt des Stangenelements zumindest teilweise in einem Mantelelement aufgenommen, wobei das Stangenelement relativ zum Mantelelement verschiebbar ist. Insbesondere kann das Stangenelement relativ zum Mantelelement drehbar und verschiebbar sein. Insbesondere ist das Mantelelement koaxial zum Anschlussstutzen angeordnet. Gemäss eines Ausführungsbeispiels enthält das Mantelelement ein Innengewinde, welches mit einem auf dem Stangenelement befindlichen Aussengewinde in Eingriff steht, sodass durch eine mittels der Antriebseinheit erzeugbare Drehbewegung des Stangenelements das Stangenelement und das Schliesselement relativ zum Ventilgehäuse verschiebbar sind.

Gemäss eines Ausführungsbeispiels ist das Mantelelement mit dem Anschlussstutzen verbindbar, wobei das erste Umgebungsdichtungselement zwischen dem Mantelelement und dem Anschlussstutzen gehalten ist. Insbesondere kann die Krempe des ersten Umgebungsdichtungselements durch das Mantelelement und den Anschlussstutzen befestigt sein, das heisst, die Position der Krempe ist durch das Mantelelement und den Anschlussstutzen vorgegeben, die miteinander, beispielsweise über eine Flanschverbindung, verbunden sind.

Gemäss eines Ausführungsbeispiels enthält der Anschlussstutzen ein Hülsenelement. Insbesondere ist das Hülsenelement im Innenraum des Anschlussstutzens angeordnet, wobei die Betätigungsvorrichtung, das Schliesselement und das erste Umgebungsdichtungselement innerhalb des Hülsenelements angeordnet sind. Das Hülsenelement kann insbesondere als ein dünnwandiges Zylinderelement ausgebildet sein. Das Hülsenelement kann in einem Endbereich einen Flansch aufweisen, der im eingebauten Zustand auf einem entsprechenden Absatz des Anschlussstutzens aufliegt. Das Hülsenelement umfasst somit ein Mantelelement, welches in axialer Richtung offen ist. Das Mantelelement weist somit an seinem ersten Ende und an seinem zweiten Ende je eine Endöffnung auf. Gemäss eines Ausführungsbeispiels kann das Hülsenelement mindestens eine seitliche Öffnung im Mantelelement enthalten, sodass ein Fluid durch diese seitliche Öffnung in den Innenraum des Hülsenelements eintreten kann und diesen durch eine der Endöffnungen des Hülsenelements verlassen kann, wenn sich die Betätigungsvorrichtung im geöffneten Zustand befindet. Das Hülsenelement, insbesondere das Mantelelement, kann mehrere seitliche Öffnungen enthalten.

Insbesondere kann sich das Hülsenelement im Innenraum des Anschlussstutzens von dessen Aufnahmeöffnung bis zum ersten Fluiddichtungselement erstrecken. Das zweite Fluiddichtungselement ist zwischen dem Ventilsitz und dem ersten Fluiddichtungselement angeordnet. Gemäss eines Ausführungsbeispiels ist der Aussendurchmesser des zweiten Fluiddichtungselements kleiner als der Aussendurchmesser des ersten Fluiddichtungselements. Das erste Fluiddichtungselement ist insbesondere weder mit dem Ventilsitz noch mit dem zweiten Fluiddichtungselement noch mit dem Schliesselement verbunden. Das erste Fluiddichtungselement wird vom Hülsenelement in seiner Position gehalten.

Wenn das Schliesselement in die geschlossene Position bewegt wird, das heisst, die Position, in welcher der Fluidkanal durch das Schliesselement geschlossen ist, kommt das untere Ende des Schliesselements zuerst mit dem ersten Fluiddichtungselement und danach mit dem zweiten Fluiddichtungselement in Kontakt. An das untere Ende des Schliesselements schliesst ein zylinderförmiger Abschnitt und ein Absatz an. Das untere Ende des Schliesselements sowie ein Teil des zylinderförmigen Abschnitts werden somit im zweiten Fluiddichtungselement aufgenommen, bevor der Absatz mit dem ersten Fluiddichtungselement in Kontakt tritt. Somit erfolgt eine duale Abdichtung im Durchgang, das heisst, der Fluidkanal wird mittels der beiden ersten und zweiten Fluiddichtungselemente verschlossen und damit vollständig abgedichtet.

Insbesondere kann ein sich von der Fluideintrittsöffnung bis zur Fluidaustrittsöffnung erstreckender durchgehender Fluidkanal ausgebildet werden, wenn die Betätigungsvorrichtung sich im geöffneten Zustand befindet. Wenn sich die Betätigungsvorrichtung im geöffneten Zustand befindet, ist das Schliesselement nicht in Kontakt mit dem ersten Fluiddichtungselement.

Gemäss eines Ausführungsbeispiels ist das erste Fluiddichtungselement als ein ringförmiges Dichtungselement ausgebildet. Gemäss des vorliegenden Ausführungsbeispiels liegt das erste Fluiddichtungselement auf einem auf dem Ventilsitz angeordneten Ringelement auf, welches ein Ausführungsbeispiel für das zweite Fluiddichtungselement ausbildet. Das Ringelement liegt im geschlossenen Zustand an einer entsprechenden Auflagefläche des Schliesselements an. Mittels des Ringelements ist das Schliesselement exakt im entsprechenden Ventilsitz gehalten.

Das erste Fluiddichtungselement kann einfach ausgewechselt werden, da es im Betrieb Verschleiss ausgesetzt ist. Hierzu muss nur die Betätigungsvorrichtung und das Schliesselement sowie das Hülsenelement entfernt werden. Gemäss eines Ausführungsbeispiels ist das erste Fluiddichtungselement zwischen dem Hülsenelement und dem Ventilsitz bzw. dem darauf befindlichen zweiten Fluiddichtungselement angeordnet. Da nur eine der Seitenflächen des ersten Fluiddichtungselements im Betrieb Verschleiss ausgesetzt ist, ist es möglich, das erste Fluiddichtungselement wiederzuverwerten, indem dessen Auflageflächen beispielsweise umgekehrt werden, d.h. die Unterseite des ersten Fluiddichtungselements wird anstelle von dessen Oberseite dem Fluid ausgesetzt.

Ein Vorteil des erfindungsgemässen Ventils ist darin zu sehen, dass durch das erste und zweite Umgebungsdichtungselement eine verbesserte Abdichtung nach aussen, das heisst gegen den Austritt von Fluid in die Umgebung, ermöglicht ist. Das vorliegende Ventil weist somit eine duale Abdichtung nach aussen auf, d.h. eine verbesserte Abdichtung gegen Leckagen nach aussen. Zudem weist das erfindungsgemässe Ventil auch eine verbesserte Abdichtung im Durchgang auf. Durch das erste Fluiddichtungselement und das zweite Fluiddichtungselement ist eine sehr gute Dichtigkeit gegen den Durchtritt des Fluids im geschlossenen Zustand ermöglicht. Auch für die Fluiddichtungselementanordnung wird somit eine Dichtungsanordnung verwendet, mittels welcher eine duale Abdichtung ermöglicht ist.

### Kurzbeschreibung der Zeichnungen

Nachfolgend wird das erfindungsgemässe Ventil anhand einiger Ausführungsbeispiele dargestellt. Es zeigen
Fig. 1 eine Ansicht eines Ventils gemäss eines ersten Ausführungsbeispiels,
Fig. 2 einen Schnitt durch das Ventil gemäss Fig. 1 im geschlossenen Zustand,
Fig. 3 einen Schnitt durch das Ventil gemäss Fig. 1 im geöffneten Zustand,
Fig. 4 einen Schnitt durch ein Ventil gemäss eines zweiten Ausführungsbeispiels im geschlossenen Zustand,
Fig. 5 einen Schnitt durch ein Ventil gemäss des zweiten Ausführungsbeispiels im geöffneten Zustand.

### Detaillierte Beschreibung der Zeichnungen

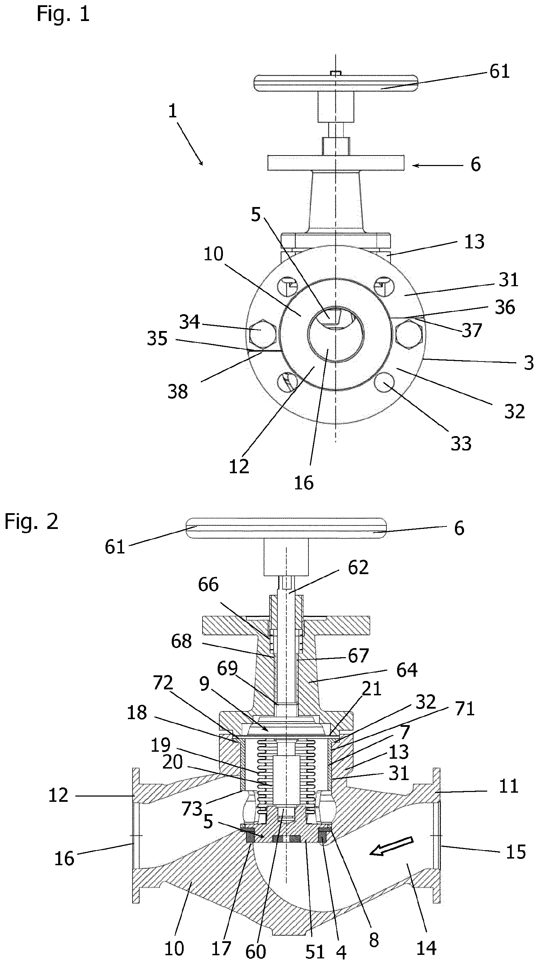

Fig. 1 zeigt eine Ansicht eines erfindungsgemässen Ventils 1 gemäss eines ersten Ausführungsbeispiels. Das Ventil 1 enthält ein Ventilgehäuse 10. Vom Ventilgehäuse 10 ist ein Auslassstutzen 12 sichtbar, der ein abnehmbares Adapterflanschelement 3 trägt. Der Auslassstutzen 12 enthält eine Fluidaustrittsöffnung 16. Zumindest einer der Einlass- oder Auslassstutzen 11, 12 kann ein Adapterflanschelement 2, 3 enthalten, welches vom Ein- oder Auslassstutzen 11, 12 abnehmbar ist. Der Einlassstutzen 11 und der Auslassstutzen 12 können auch einen Flansch enthalten, der zur Verbindung mit einem entsprechenden Rohrleitungsflansch ausgebildet ist.

Das dargestellte Adapterflanschelement 3 enthält eine Mehrzahl von Bohrungen 33, die zur Verbindung mit einem Flansch einer an das Ventil 1 anschliessenden Rohrleitung ausgebildet sind. Das Adapterflanschelement 3 umfasst mindestens ein erstes Teilringelement 31 und ein zweites Teilringelement 32. Jedes der Teilringelemente 31, 32 weist ein erstes Ende 35, 37 und ein zweites Ende 36, 38 auf, wobei je ein Absatz am ersten Ende und je ein Absatz am zweiten Ende angeordnet ist. Gemäss des vorliegenden Ausführungsbeispiels befindet sich in jedem der Absätze eine Absatzbohrung, welche mit der jeweiligen Absatzbohrung des Absatzes des anderen Teilringelements fluchtet, wenn sie derart angeordnet sind, dass sie insgesamt einen Kreisring ergeben, wie in Fig. 1 für das Adapterflanschelement 3 gezeigt ist. Die Absätze sind in Fig. 1 nicht sichtbar. Auch die Absatzbohrungen sind nicht sichtbar, da sie gemäss Fig. 1 durch ein Verbindungselement 34 verdeckt sind, welches die beiden übereinander liegenden Absätze miteinander verbindet. Das Verbindungselement 34 kann beispielsweise als eine Schraube mit zugehöriger Mutter ausgebildet sein.

Der Einlassstutzen (siehe Fig. 2) ist in der vorliegenden Darstellung durch den Auslassstutzen 12 sowie das Adapterflanschelement 3 verdeckt. Von dem zwischen dem Einlassstutzen 11 und dem Auslassstutzen 12 liegenden Anschlussstutzen 13 ist nur ein kleiner Teil sichtbar. Der Anschlussstutzen 13 enthält eine Betätigungsvorrichtung 6, welche als Absperrvorrichtung für ein durch den Fluidkanal 14 strömendes Fluid ausgebildet ist. Die Betätigungsvorrichtung 6 ist mit einem Schliesselement 5 koppelbar oder gekoppelt. Das Schliesselement 5 ist in Fig. 2 deutlicher sichtbar als in Fig. 1.

Fig. 2 zeigt einen Schnitt durch das Ventil 1 gemäss Fig. 1. Das Ventil 1 enthält ein Ventilgehäuse 10. Das Ventilgehäuse 10 enthält einen Einlassstutzen 11, einen Auslassstutzen 12 sowie einen Anschlussstutzen 13. Im Einlassstutzen 11 ist eine Fluideintrittsöffnung 15 angeordnet, im Auslassstutzen 12 ist eine Fluidaustrittsöffnung 16 angeordnet. Im Inneren des Ventilgehäuses 10 erstreckt sich ein Fluidkanal 14 von der Fluideintrittsöffnung 15 zur Fluidaustrittsöffnung 16. Im Fluidkanal 14 ist ein Ventilsitz 17 angeordnet, wobei der Fluidkanal 14 mittels eines durch den Anschlussstutzen 13 geführten Schliesselements 5 verschliessbar ist, wenn das Schliesselement 5 auf dem Ventilsitz 17 aufliegt. Auf dem Ventilsitz 17 ist ein erstes Fluiddichtungselement 8 angeordnet, sowie ein zweites Fluiddichtungselement 4. Das erste Fluiddichtungselement 8 kann insbesondere als ein ringförmiges Fluiddichtungselement ausgebildet sein. Das erste Fluiddichtungselement 8 kann ein elastisches Material enthalten. Das erste Fluiddichtungselement 8 kann auch ein Metall enthalten, wenn das Ventil für Fluide eingesetzt wird, die Temperaturen aufweisen, die eine Verwendung von Kunststoffdichtungen nicht erlauben. Insbesondere kann das erste Fluiddichtungselement aus Stahl bestehen, beispielsweise aus rostfreiem Stahl.

Das zweite Fluiddichtungselement 4 kann insbesondere als ein ringförmiges Fluiddichtungselement ausgebildet sein. Das zweite Fluiddichtungselement 4 kann ein elastisches Material enthalten. Das zweite Fluiddichtungselement 4 kann auch ein Metall enthalten, wenn das Ventil für Fluide eingesetzt wird, die Temperaturen aufweisen, die eine Verwendung von Kunststoffdichtungen nicht erlauben. Insbesondere kann das zweite Fluiddichtungselement 4 aus Stahl bestehen, beispielsweise aus rostfreiem Stahl.

In Fig. 2 ist auch der Anschlussstutzen 13 im Schnitt dargestellt. Der Anschlussstutzen 13 enthält eine Betätigungsvorrichtung 6. Die Betätigungsvorrichtung 6 ist mit einem Schliesselement 5 gekoppelt, bzw. das Schliesselement 5 ist mit der Betätigungsvorrichtung 6 koppelbar. Gemäss des vorliegenden Ausführungsbeispiels umfasst die Betätigungsvorrichtung 6 eine Antriebseinheit 61, welche mit einem Stangenelement 62 verbunden ist. Die Antriebseinheit 61 ist somit an einem Ende des Stangenelements 62 angebracht, an dessen gegenüberliegenden Ende befindet sich das Schliesselement 5. Das Schliesselement 5 ist gemäss dieses Ausführungsbeispiels als ein Kolbenelement 51 ausgebildet. Das Schliesselement 5 ist in einer Anschlussbohrung 31 des Anschlussstutzens 13 verschiebbar gelagert.

Insbesondere kann das Schliesselement 5 mit der Betätigungsvorrichtung 6 verbunden sein, sodass die Position des Schliesselements 5 mittels der Betätigungsvorrichtung 6 verändert werden kann. Das Schliesselement 5 kann eine Auflagefläche enthalten, welche auf dem ersten Fluiddichtungselement 8 aufliegt, wenn der Fluidkanal 14 geschlossen ist. Die Auflagefläche wird gemäss des vorliegenden Ausführungsbeispiels durch einen Absatz gebildet, an welchen ein zylinderförmiger Abschnitt anschliesst, welcher einen Teil der Aussenwand des Schliesselements 5 ausbildet, der im zweiten Fluiddichtungselement 4 aufgenommen ist. Der Teil der Aussenwand dient als Auflagefläche, welche auf dem zweiten Fluiddichtungselement 4 aufliegt. Diese Aussenwand kann wie in der vorliegenden Darstellung zylinderförmig ausgebildet sein, sie könnte auch konisch ausgebildet sein. Auf diese Weise kann das Schliesselement 5 exakt auf bzw. im Ventilsitz 17 positioniert werden.

Das erste Fluiddichtungselement 8 ist auf dem Ventilsitz 17 angeordnet. Zudem befindet sich gemäss dieses Ausführungsbeispiels das zweite Fluiddichtungselement 4 auf dem Ventilsitz 17. Gemäss des vorliegenden Ausführungsbeispiels liegt das erste Fluiddichtungselement 8 auf dem zweiten Fluiddichtungselement 4 auf. Das erste Fluiddichtungselement 8 ist mit einer radialen Auflagefläche des Schliesselements 5 in Kontakt, wenn die Betätigungsvorrichtung 6 geschlossen ist, also die Funktion einer Absperrvorrichtung für das Fluid hat. Das zweite Fluiddichtungselement 4 liegt auf einer sich in axialer Richtung erstreckenden Auflagefläche des Schliesselements 5 auf. Das Schliesselement 5 gemäss des vorliegenden Ausführungsbeispiels umfasst somit eine radiale Endfläche, eine sich in axialer Richtung an die Endfläche anschliessende axiale Auflagefläche, die als Mantelfläche ausgebildet ist, sowie eine an die Mantelfläche anschliessende radiale Auflagefläche. Somit weist das Schliesselement einen Absatz auf. Das erste Fluiddichtungselement 8 kommt im geschlossenen Zustand der Absperrvorrichtung 4 auf die radiale Auflagefläche des Schliesselements 5 zu liegen und das zweite Fluiddichtungselement 4 kommt im geschlossenen Zustand auf die Mantelfläche des Schliesselements 5 zu liegen. Insbesondere kann das Schliesselement 5 beim Schliessvorgang zuerst mit dem zweiten Fluiddichtungselement 4 in Kontakt kommen, bevor es in Kontakt mit dem ersten Fluiddichtungselement 8 kommt. Der Fluidkanal 14 kann also bereits durch das zweite Fluiddichtungselement 4 verschlossen werden, bevor die zusätzliche Abdichtung durch den Kontakt des Schliesselements 5 mit dem ersten Fluiddichtungselement 8 erfolgt. Hiermit wird eine duale Abdichtung im Durchgang ermöglicht.

Das erste Fluiddichtungselement 8 und das zweite Fluiddichtungselement 4 können einfach ausgewechselt werden, da sie im Betriebszustand Verschleiss ausgesetzt sein können. Hierzu muss nur die Betätigungsvorrichtung 6 und das Schliesselement 5, das Hülsenelement 7 und das erste Fluiddichtungselement 8 entfernt werden. Gemäss des vorliegenden Ausführungsbeispiels ist das erste Fluiddichtungselement 8 zwischen dem Hülsenelement 7 und dem Ventilsitz 17 bzw. dem darauf befindlichen zweiten Fluiddichtungselement 4 angeordnet.

Ein erstes Umgebungsdichtungselement 9 erstreckt sich vom Schliesselement 5 zum Anschlussstutzen 13, um einen Kontakt der Betätigungsvorrichtung 6 mit dem im Betriebszustand durch den Fluidkanal 14 strömenden Fluid zu verhindern. Insbesondere kann die Betätigungsvorrichtung 6 ein Stangenelement 62 umfassen, welches einen ersten Abschnitt und einen zweiten Abschnitt aufweist, wobei der erste Abschnitt des Stangenelements 62 mit einer Antriebseinheit 61 verbindbar ist. Der zweite Abschnitt des Stangenelements 62 ist mit dem Schliesselement 5 verbindbar. Gemäss des vorliegenden Ausführungsbeispiels ist die Antriebseinheit 61 als Handrad ausgebildet, welches nur exemplarisch für eine Vielzahl möglicher Antriebseinheiten dargestellt ist. Der Anschlussstutzen 13 enthält eine Aufnahmeöffnung 18, wobei sich der zweite Abschnitt des Stangenelements 62 von der Aufnahmeöffnung 18 des Anschlussstutzens 13 zum Schliesselement 5 erstreckt. Der zweite Abschnitt des Stangenelements 62 ist innerhalb des ersten Umgebungsdichtungselements 9 angeordnet.

Gemäss des vorliegenden Ausführungsbeispiels ist der erste Abschnitt des Stangenelements 62 in einem Mantelelement 64 aufgenommen, wobei das Stangenelement 62 relativ zum Mantelelement 64 drehbar und verschiebbar ist. Das Mantelelement 64 ist insbesondere koaxial zum Anschlussstutzen 13 angeordnet. Das Mantelelement 64 ist mit dem Anschlussstutzen 13 verbunden. Beispielsweise kann das Mantelelement 64 mittels einer Schraubverbindung, insbesondere mittels einer Flanschverbindung, lösbar mit dem Anschlussstutzen 13 verbunden sein. Gemäss dieses Ausführungsbeispiels ist das Mantelelement 64 vom Anschlussstutzen 13 beispielsweise für Reinigungszwecke oder für Wartungsarbeiten abnehmbar, beispielsweise um eines der ersten oder zweiten Fluiddichtungselemente 4,8 oder das erste Umgebungsdichtungselement 9 auszutauschen.

Das erste Umgebungsdichtungselement 9 ist gemäss dieses Ausführungsbeispiels einerseits mittels des Mantelelements 62 am Anschlussstutzen 13 befestigt. Das erste Umgebungsdichtungselement 9 ist auch am Schliesselement 5 befestigt. Die Länge des ersten Umgebungsdichtungselements 9 ist in Abhängigkeit von der Position des Schliesselements 5 veränderbar, das heisst, das erste Umgebungsdichtungselement 9 passt sich in seiner Länge der entsprechenden Position des Schliesselements 5 an.

Gemäss des vorliegenden Ausführungsbeispiels enthält das erste Umgebungsdichtungselement 9 eine Buchse 19. Die Buchse 19 ist insbesondere als rotationssymmetrisches Bauelement ausgebildet. Die Buchse 19 umfasst ein Anpassungselement 20 und eine Krempe 21. Das Anpassungselement 20 und die Krempe 21 können einteilig ausgebildet sein. Das Anpassungselement 20 ist gemäss dieses Ausführungsbeispiels als Faltenbalg ausgebildet. Die Krempe 21 ist fluiddicht mit dem Anschlussstutzen 13 verbindbar und das Anpassungselement 20 ist fluiddicht mit dem Schliesselement 5 verbindbar. Die Buchse 19, insbesondere deren Anpassungselement 20, kann elastisch verformbar sein. Unter einer elastischen Verformung wird eine reversible Verformung verstanden, das heisst, dass sich die Buchse 19 bzw. deren Anpassungselement 20, bei einer Verlängerung verformt, um die Längenänderung auszugleichen, die Verformung bei einer Verkürzung der Buchse 19 wieder rückgängig gemacht wird. Gemäss des vorliegenden Ausführungsbeispiels setzt das erste Umgebungsdichtungselement 9 der Verschiebebewegung der Betätigungsvorrichtung 6 keinen nennenswerten Widerstand entgegen.

Die Krempe 21 kann somit zwischen dem Mantelelement 64 und dem Anschlussstutzen 13 angeordnet sein und wird beim Zusammenbau des Mantelelements mit dem Anschlussstutzen zwischen diesen beiden Bauelementen eingeklemmt. Mittels der Buchse 19 kann die Betätigungsvorrichtung 6 vom Fluid abgeschirmt werden. Das Anpassungselement 20 ist an einer Aussenwand des Schliesselements 5 angebracht, beispielsweise mittels einer Schweissverbindung oder einer Schrumpfverbindung. Insbesondere für einen Betrieb bei Umgebungstemperaturen und geringe Fluiddrücke kann auch eine Klebeverbindung zum Einsatz kommen. Daher ist nur das Schliesselement 5 und die Aussenseite der Buchse 19 in Kontakt mit dem im Fluidkanal 14 strömenden Fluid.

Für den Fall, dass das erste Umgebungsdichtungselement 9 versagen sollte, ist ein zweites Umgebungsdichtungselement 66 vorgesehen. Das zweite Umgebungsdichtungselement 66 befindet sich in einem ringförmigen Zwischenraum, der an seiner Aussenseite vom Mantelelement 64 begrenzt wird und an seiner Innenseite vom Stangenelement 62 begrenzt wird. Das zweite Umgebungsdichtungselement 66 kann beispielsweise als Stopfbuchsenelement ausgebildet sein. Für Ventile, die bei Fluiddrücken eingesetzt werden, die im Bereich des Umgebungsdrucks liegen, können auch O-Ringe, Radial-Wellendichtringe, Elastomerdichtungen oder Graphitdichtungen zum Einsatz kommen. Das Stopfbuchsenelement kann einen Dichtungsabschnitt und einen Führungsabschnitt umfassen. Der Führungsabschnitt kann als Hülsenelement mit einem Aussengewinde ausgebildet sein, welches zum Eingriff eines in der axialen Bohrung angeordneten Innengewindes bestimmt ist. Die Pressung auf den Dichtungsabschnitt des Stopfbuchsenelements kann durch eine Änderung der Position des Führungselements in der Bohrung des Mantelelements 46 verändert werden. Somit kann der Druck des Dichtungsabschnitts erhöht werden, was eine Verwendung des Stopfbuchsenelements bei höheren Fluiddrucken ermöglicht.

Die Verbindung zwischen dem ersten Umgebungsdichtungselement 9 und dem Schliesselement 5 ist insbesondere als fluiddichte Verbindung ausgebildet. Selbst ein unter Druck stehendes Fluid kann nicht in den Zwischenraum gelangen, der sich zwischen dem ersten Umgebungsdichtungselement 9 und der Betätigungsvorrichtung 6 befindet. Die Betätigungsvorrichtung 6 wird somit durch das erste Umgebungsdichtungselement 9 vom Fluidstrom abgeschirmt. Das Fluid kann auch nicht in den Innenraum des Mantelelements 64 gelangen, in welchem sich der erste Abschnitt des Stangenelements 62 der Betätigungsvorrichtung 6 befindet. Das Fluid kann somit auch nicht durch allfällige Schmiermittel oder Abrieb verunreinigt werden, welche sich im ersten Abschnitt des Stangenelements 62 befinden können.

Der erste Abschnitt des Stangenelements 62 erstreckt sich von der Antriebseinheit 61 bis zur Krempe 21. Der zweite Abschnitt des Stangenelements 62 erstreckt sich von der Krempe 21 bis zum Aufnahmezapfen 60, welcher in einer korrespondierenden Ausnehmung des Schliesselements 5 angeordnet ist. Die Krempe 21 weist gemäss eines Ausführungsbeispiels einen inneren kuppelartigen Abschnitt auf, welcher von einem äusseren ringförmigen ebenen Abschnitt umgeben ist. Der äussere ringförmige ebene Abschnitt des der Krempe 21 ist zwischen dem Anschlussstutzen 13 und dem Mantelelement 64 einklemmbar. Der innere kuppelartige Abschnitt weist eine zentrale Ausnehmung auf, durch welche das Stangenelement 62 hindurchgeführt ist. Der innere kuppelartige Abschnitt umgibt somit das Stangenelement 62. An den inneren kuppelartigen Abschnitt schliesst das Anpassungselement 20 an.

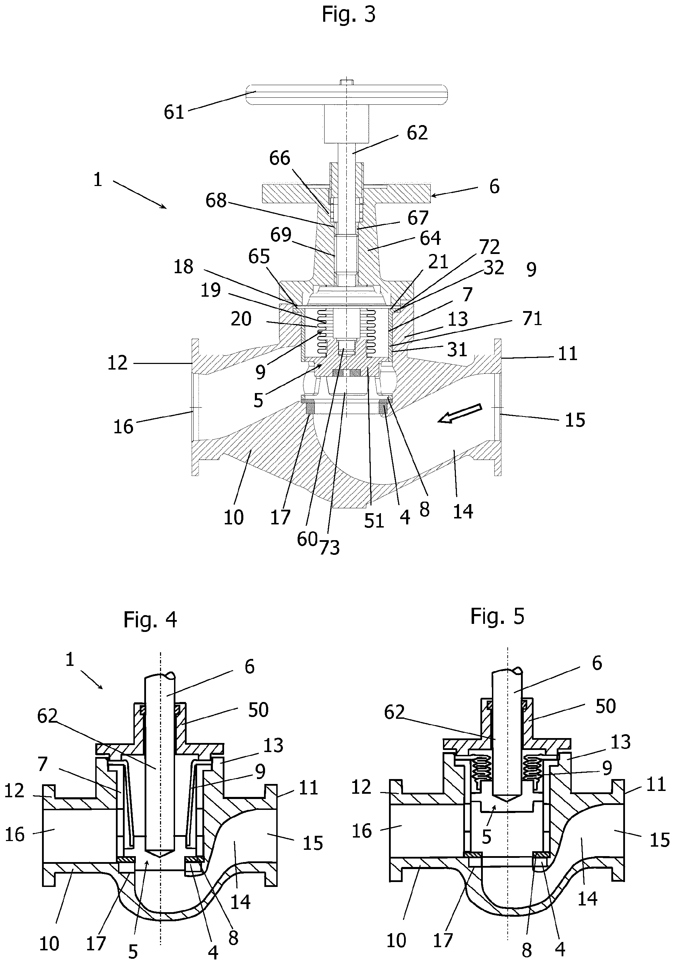

Gemäss des vorliegenden Ausführungsbeispiels ist das Anpassungselement 20 zwischen der Krempe 21 und dem Schliesselement 5 angeordnet. Das der Krempe 21 gegenüberliegende Ende des Anpassungselements 20 ist fluiddicht mit dem Schliesselement 5 verbunden. Das Anpassungselement 20 ist derart ausgebildet, dass die Länge des ersten Umgebungsdichtungselements 9 in Abhängigkeit von der Position des Schliesselements 5 anpassbar ist. Insbesondere kann das Anpassungselement 20 eine Wellenform aufweisen, wie in Fig. 2 gezeigt, kann das Anpassungselement 20 beispielsweise einen Faltenbalg enthalten. Das erste Umgebungsdichtungselement 9 kann auch ein anders geformtes Anpassungselement 20 enthalten, beispielsweise ein elastisches Element umfassen. Ein elastisches Element kann aus einem elastischen Material bestehen, das heisst, einem Material, das seine Form infolge einer Verlängerung beim Schliessen des Schliesselements 5 entsprechend der geänderten Länge anpassen kann und reversibel in seine ursprüngliche Form zurückehrt, im vorliegenden Ausführungsbeispiel, wenn Schliesselement 5 in die geöffnete Stellung zurückkehrt, wie in Fig. 3 dargestellt. Das elastische Material kann ein Metall enthalten oder aus Metall bestehen. Insbesondere kann das elastische Material einen rostfreien Stahl umfassen. Gemäss eines nicht dargestellten Ausführungsbeispiels kann das Anpassungselement als ein elastischer Schlauch ausgebildet sein. Ein derartiger elastischer Schlauch kann ein Elastomer enthalten, beispielsweise einen Gummi.

Gemäss des vorliegenden Ausführungsbeispiels ist die Krempe 21 zwischen dem Mantelelement 64 und dem Anschlussstutzen 13 befestigt. Insbesondere ist der äussere ringförmige Abschnitt der Krempe 21 in einem Befestigungsbereich zwischen dem Anschlussstutzen 13 und dem Mantelelement 64 gehalten. Der Befestigungsbereich kann durch einen in der Innenwand des Anschlussstutzens angeordneten Absatz ausgebildet werden, auf welchem der äussere ringförmige Abschnitt der Krempe 21 aufliegt. Zusätzlich kann im Befestigungsbereich auch ein Hülsenelement 7 gehalten werden, auf welches in der Folge noch detaillierter eingegangen wird.

Die Betätigungsvorrichtung 6, welche gemäss des vorliegenden Ausführungsbeispiels das Stangenelement 62 und das Mantelelement 64 enthält, weist einen der Antriebseinheit 61 gegenüberliegenden Aufnahmezapfen 60 auf, welcher mit dem Schliesselement 5 koppelbar ist. Das Stangenelement 62 ist in einer Ausnehmung des Schliesselements 5 drehbar gelagert. Das Schliesselement 5 kann somit gemäss dieses Ausführungsbeispiels eine rein translatorische Bewegung in der Bohrung 31 des Auslassstutzens 13 oder in einem darin angeordneten Hülsenelement 7 ausführen.

Das Hülsenelement 7 ist gemäss dieses Ausführungsbeispiels in der Bohrung 31 des Anschlussstutzens 13 angeordnet. Das Hülsenelement 7 dient zum Schutz des ersten Umgebungsdichtungselements 9 vor Stössen, die durch das strömende Fluid verursacht werden können und hält das erste Fluiddichtungselement 8 in seiner Position auf dem Ventilsitz 17. Die Bohrung 31 wird von der Innenwand des Anschlussstutzens 13 ausgebildet. Das Hülsenelement 7 enthält Öffnungen, sodass das durch den Fluidkanal 14 strömende Fluid im geöffneten Zustand des Schliesselements 5 nicht auf das erste Umgebungsdichtungselement 9 auftrifft, sondern, wie in Fig. 3 gezeigt, unterhalb der Auflagefläche des Schliesselements 5 hindurchströmt.

Das Hülsenelement 7 kann insbesondere als ein dünnwandiges Zylinderelement ausgebildet sein. Das Hülsenelement 7 enthält ein Mantelelement 71, wobei das Mantelelement 71 an seinem ersten Ende und an seinem zweiten Ende je eine Endöffnung aufweist. Das Hülsenelement 7 kann in einem Endbereich in der Nähe des ersten Endes einen Flansch 72 aufweisen, der im eingebauten Zustand auf einem entsprechenden Absatz 32 des Anschlussstutzens 13 aufliegt. Die Endöffnung des Mantelelements 71 am ersten Ende wird vom Flansch 72 umrahmt. Das zweite Ende des Mantelelements 71 liegt gemäss eines nicht dargestellten Ausführungsbeispiels unmittelbar auf dem Ventilsitz 17 oder gemäss Fig. 2 auf dem ersten Fluiddichtungselement 8 auf. Das erste Fluiddichtungselement 8 ist auf dem Ventilsitz 17 angeordnet.

Das Hülsenelement 7 enthält mindestens eine seitliche Öffnung 73 im Mantelelement 71, sodass ein Fluid durch diese seitliche Öffnung 73 in den Innenraum des Hülsenelements 7 eintreten kann und diesen durch die am zweiten Ende angeordnete Endöffnung des Hülsenelements 7 verlassen kann, wie in Fig. 3 sichtbar. Alternativ kann das Mantelelement 71 mehrere seitliche Öffnungen 73 enthalten, was ebenfalls in Fig. 3 gezeigt ist.

In Fig. 2 ist der geschlossene Zustand des Schliesselements 5 gezeigt, das heisst, das Schliesselement 5 liegt auf dem im Ventilgehäuse 10 befindlichen Ventilsitz 17 auf dem darauf befindlichen ersten Fluiddichtungselement 8 auf. Der Abstand des Schliesselements 5 vom Ventilsitz 17 bzw. dem ersten Fluiddichtungselement 8 kann durch die Betätigungsvorrichtung 6 eingestellt werden. Daher ist das in Fig. 2 und Fig. 3 dargestellte Ventil als Regelungsventil ausgebildet. Das Stangenelement 62 enthält ein Aussengewinde 68, welches in ein Innengewinde 69 eingreift, welches im Mantelelement 64 angeordnet ist.

Gemäss eines nicht dargestellten Ausführungsbeispiels kann das Schliesselement 5 auch mittels einer Betätigungsvorrichtung 6 betätigt werden, welche eine hydraulisch oder pneumatisch betätigbare Antriebseinheit 61 umfasst. Alternativ kann eine Betätigungsvorrichtung 6 zum Einsatz kommen, die eine elektrische Antriebseinheit aufweist. Die Betätigungsvorrichtung 6 kann, wie im vorliegenden Ausführungsbeispiel gezeigt, manuell verstellbar sein. Alternativ kann eine Regelungseinheit vorgesehen sein, mittels welcher das Schliesselement 5 ohne manuellen Eingriff verstellbar ist, indem eine hydraulische, pneumatische oder elektrische Antriebseinheit für die Betätigungsvorrichtung 6 betätigt wird.

In Fig. 3 ist der geöffnete Zustand des Schliesselements 5 gezeigt, das heisst, das Schliesselement 5 liegt nicht auf dem im Ventilgehäuse 10 befindlichen Ventilsitz 17 oder dem darauf befindlichen ersten Fluiddichtungselement 8 auf. Der Abstand des Schliesselements 5 vom Ventilsitz 17 bzw. dem ersten Fluiddichtungselement 8 kann durch die Betätigungsvorrichtung 6 eingestellt werden. Daher ist das in Fig. 3 dargestellte Ventil als Regelungsventil ausgebildet. Gemäss dieses Ausführungsbeispiels steht die Betätigungsvorrichtung 6 nicht in Kontakt mit dem Fluid, welches durch den Fluidkanal 14 strömt, wenn die Verbindung zwischen der Fluideintrittsöffnung 15 und der Fluidaustrittsöffnung 16 geöffnet ist, wie in Fig. 3 gezeigt. Mittels des Hülsenelements 7 steht auch das erste Umgebungsdichtungselement 9 nicht in Kontakt mit dem Fluid, weil das Schliesselement 5 den Durchgang durch das Hülsenelement 7 verschliesst und sich die seitlichen Öffnungen des Hülsenelements 7 unterhalb der Position des Schliesselements 5 befinden.

Fig. 4 zeigt einen Schnitt durch ein zweites Ausführungsbeispiel eines erfindungsgemässen Ventils 1. Das Ventil 1 enthält ein Ventilgehäuse 10, wobei das Ventilgehäuse 10 einen Einlassstutzen 11, einen Auslassstutzen 12, einen Anschlussstutzen 13 zur Aufnahme einer Betätigungsvorrichtung 6 enthält. Eine Fluideintrittsöffnung 15 ist im Einlassstutzen 11 angeordnet. Eine Fluidaustrittsöffnung 16 ist im Auslassstutzen 12 angeordnet. Im Inneren des Ventilgehäuses 10 erstreckt sich ein Fluidkanal 14 von der Fluideintrittsöffnung 15 zur Fluidaustrittsöffnung 16, wobei im Fluidkanal 14 ein Ventilsitz 17 angeordnet ist, sodass der Fluidkanal 14 mittels des Schliesselements 5 verschliessbar ist, wenn das Schliesselement 5 auf dem Ventilsitz 17 aufliegt.

Ein erstes Fluiddichtungselement 8 ist auf einer Auflagefläche des Schliesselements 5 angeordnet, welche in Richtung des Ventilsitzes 17 ausgerichtet ist. Mittels des ersten Fluiddichtungselements 8 kann der Fluidkanal 14 verschlossen werden, indem das Schliesselement 5 mit dem ersten Fluiddichtungselement 8 auf dem Ventilsitz 17 oder einem zweiten Fluiddichtungselement 4 aufliegt. Mittels des ersten Fluiddichtungselements 8 und des zweiten Fluiddichtungselements 4 wird somit die erforderliche Dichtheit im Durchgang erzielt. Zur Verbesserung der Dichtheit ist, wie im vorhergehenden Ausführungsbeispiel, das zweite Fluiddichtungselement 4 vorgesehen.

Das erste Fluiddichtungselement 8 ist auf dem Ventilsitz 17 angeordnet. Zudem befindet sich gemäss dieses Ausführungsbeispiels das zweite Fluiddichtungselement 4 auf dem Ventilsitz 17. Gemäss des vorliegenden Ausführungsbeispiels liegt das erste Fluiddichtungselement 8 auf dem zweiten Fluiddichtungselement 4 auf. Das erste Fluiddichtungselement 8 ist mit einer radialen Auflagefläche des Schliesselements 5 in Kontakt, wenn die Betätigungsvorrichtung 6 geschlossen ist, also die Funktion einer Absperrvorrichtung für das Fluid hat. Das zweite Fluiddichtungselement 4 liegt auf einer sich in axialer Richtung erstreckenden Auflagefläche des Schliesselements 5 auf. Das Schliesselement 5 gemäss des vorliegenden Ausführungsbeispiels umfasst somit eine radiale Endfläche, eine sich in axialer Richtung an die Endfläche anschliessende axiale Auflagefläche, die als Mantelfläche ausgebildet ist, sowie eine an die Mantelfläche anschliessende radiale Auflagefläche. Somit weist das Schliesselement 5 einen Absatz auf. Das erste Fluiddichtungselement 8 kommt im geschlossenen Zustand der Betätigungsvorrichtung 6 auf die radiale Auflagefläche des Schliesselements 5 zu liegen und das zweite Fluiddichtungselement 4 kommt im geschlossenen Zustand auf die Mantelfläche des Schliesselements 5 zu liegen.

Die Betätigungsvorrichtung 6 wird mittels des ersten Umgebungsdichtungselements 9 gegen den Eintritt des durch den Fluidkanal 14 strömenden fluiden Mediums abgedichtet. Das erste Umgebungsdichtungselement 9 liegt dichtend am Schliesselement 5 an und wird zwischen dem Anschlussstutzen 13 und einem Halteelement 50 für die Betätigungsvorrichtung 6 eingeklemmt. Das Halteelement 50 kann dem in Fig. 1 bis Fig. 3 gezeigten Mantelelement 64 entsprechen. Das erste Umgebungsdichtungselement 9 kann insbesondere ein elastisches Material enthalten, sodass es sich der Länge der in den Fluidkanal 14 ragenden Betätigungsvorrichtung 6 anpassen kann. Beispielsweise kann das erste Umgebungsdichtungselement 9 einen elastischen Schlauch umfassen. Alternativ kann wie im vorhergehenden Ausführungsbeispiel eine Buchse mit einer Wellenform vorgesehen sein, beispielsweise ein Faltenbalg, was in Fig. 2 und Fig. 3 dargestellt ist. Die Buchse kann elastisch verformbar sein. Unter einer elastischen Verformung wird eine reversible Verformung verstanden, das heisst, dass sich die Buchse bei einer Verlängerung verformt, um die Längenänderung auszugleichen, die Verformung bei einer Verkürzung der Buchse wieder rückgängig gemacht wird. Gemäss des vorliegenden Ausführungsbeispiels setzt das erste Umgebungsdichtungselement 9 der Verschiebebewegung der Betätigungsvorrichtung 6 keinen nennenswerten Widerstand entgegen.

Gemäss des vorliegenden Ausführungsbeispiels enthält die Betätigungsvorrichtung 6 ein Stangenelement 62, welches ausschliesslich eine translatorische Bewegung ausführen kann. Dieses Stangenelement 62 kann beispielsweise mit einem nicht dargestellten pneumatischen oder hydraulischen Antriebseinheit gekoppelt werden. In der einfachsten Ausführung kann die Betätigungsvorrichtung 6 von der dargestellten geschlossenen Stellung in eine geöffnete Stellung verschoben werden.

Alternativ kann das Halteelement 50 mit einem Stangenelement 62 ausgestattet sein, welches, wie im vorhergehenden Ausführungsbeispiel beschrieben, ein Innengewinde enthält, in welches ein auf einem Stangenelement 62 der Betätigungsvorrichtung 6 angebrachtes Aussengewinde eingreift. Wie im vorhergehenden Ausführungsbeispiel beschrieben, ist dieses Stangenelement 62 mit einer Antriebseinheit koppelbar, sodass eine Drehbewegung auf das Stangenelement übertragbar ist. Das Stangenelement ist drehbar im Schliesselement 5 gelagert.

Das Schliesselement 5 ist derart ausgebildet, dass es eine Schliessfläche aufweist, mittels welcher der Fluidkanal 14 geschlossen werden kann, wenn sich das Schliesselement 5 in seiner untersten Stellung befindet, wobei der Begriff «unterste Stellung» sich nur auf die in Fig. 4 dargestellten Anordnung bezieht, aber nicht als Einschränkung auf eine bestimmte Raumposition zu verstehen ist. Das Ventil 1 kann selbstverständlich eine beliebige Raumposition einnehmen. Die Schliessfläche ist gegenüberliegend zur Aufnahmefläche für einen Aufnahmezapfen oder das Ende des Stangenelements 62 angeordnet. Mittels des Stangenelements 62 kann somit die Position des Schliesselements 5 im Fluidkanal 14 eingestellt werden, indem eine von einer in Fig. 4 nicht dargestellten Antriebseinheit auf das Stangenelement 62 übertragene Drehbewegung in eine Translationsbewegung des Schliesselements 5 übertragen wird.

Zwischen dem Schliesselement 5 und der Innenwand des Anschlussstutzens 13 ist ein Hülsenelement 7 angeordnet, welches dieselbe Bauweise wie die in Zusammenhang mit den vorhergehenden Ausführungsbeispielen ausgebildeten Hülsenelemente haben kann.

Fig. 5 zeigt einen Schnitt durch erfindungsgemässes Ventil 1 gemäss eines dritten Ausführungsbeispiels in der geöffneten Stellung. Das Ventil 1 enthält ein Ventilgehäuse 10, wobei das Ventilgehäuse 10 einen Einlassstutzen 11, einen Auslassstutzen 12, einen Anschlussstutzen 13 zur Aufnahme einer Betätigungsvorrichtung 6 enthält. Die Betätigungsvorrichtung 6 ist mit einem Schliesselement 5 verbunden. Eine Fluideintrittsöffnung 15 ist im Einlassstutzen 11 angeordnet. Eine Fluidaustrittsöffnung 16 ist im Auslassstutzen 12 angeordnet. Im Inneren des Ventilgehäuses 10 erstreckt sich ein Fluidkanal 14 von der Fluideintrittsöffnung 15 zur Fluidaustrittsöffnung 16, wobei im Fluidkanal 14 ein Ventilsitz 17 angeordnet ist, sodass der Fluidkanal 14 mittels des Schliesselements 5 verschliessbar ist, wenn das Schliesselement 5 auf dem Ventilsitz 17 aufliegt.

Ein erstes Fluiddichtungselement 8 ist auf einer Auflagefläche des Schliesselements 5 angeordnet, welche in Richtung des Ventilsitzes 17 ausgerichtet ist. Ein zweites Fluiddichtungselement 4 liegt auf dem Ventilsitz 17 auf und dient, wie in Fig. 4 gezeigt, der Aufnahme des Schliesselements 5. Das erste Umgebungsdichtungselement 9 ist in zusammengefaltetem Zustand dargestellt.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nichtausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Ventil (1), enthaltend ein Ventilgehäuse (10), wobei das Ventilgehäuse (10) einen Einlassstutzen (11), einen Auslassstutzen (12) und einen Anschlussstutzen (13) enthält, wobei eine Fluideintrittsöffnung (15) im Einlassstutzen (11) angeordnet ist, wobei eine Fluidaustrittsöffnung (16) im Auslassstutzen (12) angeordnet ist, wobei sich im Inneren des Ventilgehäuses (10) ein Fluidkanal (14) von der Fluideintrittsöffnung (15) zur Fluidaustrittsöffnung (16) erstreckt, welcher im Betriebszustand von einem Fluid durchströmbar ist, wobei im Fluidkanal (14) ein Ventilsitz (17) angeordnet ist, sodass der Fluidkanal (14) mittels eines Schliesselements (5) verschliessbar ist, wenn das Schliesselement (5) auf dem Ventilsitz (17) aufliegt, wobei das Schliesselement (5) mit einer Betätigungsvorrichtung (6) koppelbar ist, wobei mittels der Betätigungsvorrichtung (6) die Position des Schliesselements (5) relativ zum Ventilsitz (17) veränderbar ist, sodass der Fluidkanal (14) geöffnet ist, wenn das Schliesselement (5) nicht auf dem Ventilsitz (17) aufliegt, **dadurch gekennzeichnet, dass** zwischen dem Ventilsitz (17) und dem Schliesselement (5) ein erstes Fluiddichtungselement (8) und ein zweites Fluiddichtungselement (4) angeordnet sind, um den Fluidkanal zu verschliessen, wobei die Betätigungsvorrichtung (6) mittels eines ersten und zweiten Umgebungsdichtungselements (9, 66) gegen Leckage des Fluids aus dem Ventilgehäuse abdichtbar ist, wobei sich das erste Umgebungsdichtungselement (9) vom Schliesselement (5) zum Anschlussstutzen (13) erstreckt, um einen Kontakt der Betätigungsvorrichtung (6) mit dem im Betriebszustand durch den Fluidkanal (14) strömenden Fluid zu verhindern und mittels eines zweiten Umgebungsdichtungselements (66) der Austritt des Fluids aus dem Ventilgehäuse (10) verhinderbar ist.

2. Ventil (1) nach Anspruch 1, wobei die Länge des ersten Umgebungsdichtungselements (9) in Abhängigkeit von der Position des Schliesselements (5) veränderbar ist.

3. Ventil (1) nach einem der vorhergehenden Ansprüche, wobei das erste Umgebungsdichtungselement (9) eine Buchse (19) enthält.

4. Ventil (1) nach Anspruch 3, wobei die Buchse (19) ein Anpassungselement (20) und eine Krempe (21) umfasst.

5. Ventil (1) nach Anspruch 4, wobei die Krempe (21) fluiddicht mit dem Anschlussstutzen (13) verbindbar ist und das Anpassungselement (20) fluiddicht mit dem Schliesselement (5) verbindbar ist.

6. Ventil (1) nach einem der Ansprüche 4 oder 5, wobei das Anpassungselement (20) als Faltenbalg oder als elastischer Schlauch ausgebildet ist.

7. Ventil (1) nach einem der vorhergehenden Ansprüche, wobei das Schliesselement (5) zumindest auf einem der ersten oder zweiten Fluiddichtungselemente (4, 8) aufliegt, wenn der Fluidkanal (14) geschlossen ist.

8. Ventil (1) nach einem der vorhergehenden Ansprüche, wobei die Betätigungsvorrichtung ein Stangenelement (62) umfasst, wobei das Stangenelement (62) einen ersten Abschnitt und einen zweiten Abschnitt aufweist, wobei der erste Abschnitt des Stangenelements (62) mit einer Antriebseinheit (61) verbindbar ist, wobei der zweite Abschnitt des Stangenelements (62) mit dem Schliesselement (5) verbindbar ist.

9. Ventil (1) nach Anspruch 8, wobei der Anschlussstutzen (13) eine Aufnahmeöffnung (18) enthält, wobei der zweite Abschnitt des Stangenelements (62) sich von der Aufnahmeöffnung (18) des Anschlussstutzens (13) zum Schliesselement (5) erstreckt, sodass der zweite Abschnitt des Stangenelements (62) innerhalb des ersten Umgebungsdichtungselements (9) angeordnet ist.

10. Ventil (1) nach einem der Ansprüche 8 oder 9, wobei der erste Abschnitt des Stangenelements (62) zumindest teilweise in einem Mantelelement (64) aufgenommen ist, wobei das Mantelelement (64) an den Anschlussstutzen (13) koppelbar ist, wobei das Stangenelement (62) relativ zum Mantelelement (64) verschiebbar ist.

11. Ventil (1) nach Anspruch 10, wobei das Mantelelement (64) ein Innengewinde enthält, welches mit einem auf dem Stangenelement (62) befindlichen Aussengewinde in Eingriff steht, sodass durch eine mittels der Antriebseinheit (61) erzeugbare Drehbewegung des Stangenelements (62) das Stangenelement (62) und das Schliesselement (5) relativ zum Ventilgehäuse (10) verschiebbar sind.

12. Ventil (1) nach einem der Ansprüche 11 oder 12, wobei das Mantelelement (64) mit dem Anschlussstutzen (13) verbindbar ist, wobei das erste Umgebungsdichtungselement (9) zwischen dem Mantelelement (64) und dem Anschlussstutzen (13) gehalten ist.

13. Ventil (1) nach einem der vorhergehenden Ansprüche, wobei der Anschlussstutzen (13) ein Hülsenelement (7) enthält.

14. Ventil (1) nach Anspruch 13, wobei das Hülsenelement im Innenraum des Anschlussstutzens (13) angeordnet ist, wobei die Betätigungsvorrichtung (6), das Schliesselement (5) und das erste Umgebungsdichtungselement (9) innerhalb des Hülsenelements (7) angeordnet sind.

15. Ventil (1) nach einem der vorhergehenden Ansprüche, wobei das erste und das zweite Fluiddichtungselement (4,8) als je ein ringförmiges Dichtungselement ausgebildet sind.
